# EUROPEAN PATENT SPECIFICATION

(11) **EP 1 154 191 B1**
(45) Date of publication and mention of the grant of the patent: **16.08.2006**
(21) Application number: 01110164.9
(22) Date of filing: 07.05.2001
(51) Int. Cl.: F16L 37/32

(54) **Connection system for quick safety coupling for hydraulic braking circuits of trailers**
Anschlusssystem für Sicherheitsschnellkupplung für hydraulische Bremsanlagen von Kraftfahrzeuganhängern
Système de connexion pour le couplage rapide de sûreté pour systèmes de freinage hydraulique des remorques

(30) Priority: 12.05.2000 IT MO000099
(43) Date of publication of application: 14.11.2001
(73) Proprietor: Safim S.p.A., 41100 Modena (IT)
(72) Inventor: Mamei, Eronne, 41100 Modena (IT); Mamei, Omer, 41100 Modena (IT)
(74) Representative: Modiano, Micaela Nadia

(56) References cited:
- DE-A- 1 950 699
- FR-A- 844 214
- US-A- 4 394 039
- US-A- 4 583 711
- US-A- 4 701 074
- US-A- 4 863 201

## Description

The present invention relates to a connection system for a quick safety coupling for hydraulic braking circuits of trailers.

In trailers of transport vehicles, mainly in those for agricultural use, there is usually provided a coupling for supplying pressurized oil to their braking circuit.

Such coupling substantially consists of a bayonet connection system with which a lever mechanism is mated in order to manually open the duct for introducing oil in the circuit.

Sometimes, during hitching and unhitching of the trailers and in subsequent connection maneuvers, such lever mechanism is not used by the operator and the connection between the hydraulic braking circuit of the tractor and the circuit of the trailer is not provided or is not interrupted.

This drawback can cause several problems.

A first problem is that if the operator does not arm said lever mechanism when the trailer is hitched, the entire braking circuit of the trailer remains deactivated, with severe danger for traffic.

A second drawback is that when the trailer is unhitched and therefore it is not necessary to supply its braking circuit with pressurized oil, the distribution valve still remains active, drawing power from the hydraulic circuit of the tractor; in practice, a parasitic phenomenon occurs which has a negative effect on the performance of the tractor and of the services with which it is normally equipped.

US-A-4583711 discloses a quick coupler device for fluid systems having a combination of features as set forth in the precharacterizing portion of the appended claim 1.

The aim of the present invention is to solve the above-noted drawbacks of the prior art by providing a connection system for a quick safety coupling for hydraulic braking circuits of trailers which allows to automatically prevent the drawbacks of the prior art, substantially avoiding any oversight on the part of operators during the hitching of a trailer to a tractor and parasitic phenomena in the hydraulic circuit of the tractor.

In accordance with the invention, there is provided a connection system for a quick safety coupling for hydraulic braking circuits of trailers as defined in the appended claims.

Further characteristics and advantages of the present invention will become better apparent from the description of a preferred embodiment of a connection system for a quick safety coupling for hydraulic braking circuits of trailers, illustrated only by way of non-limitative example in the accompanying drawings, wherein:

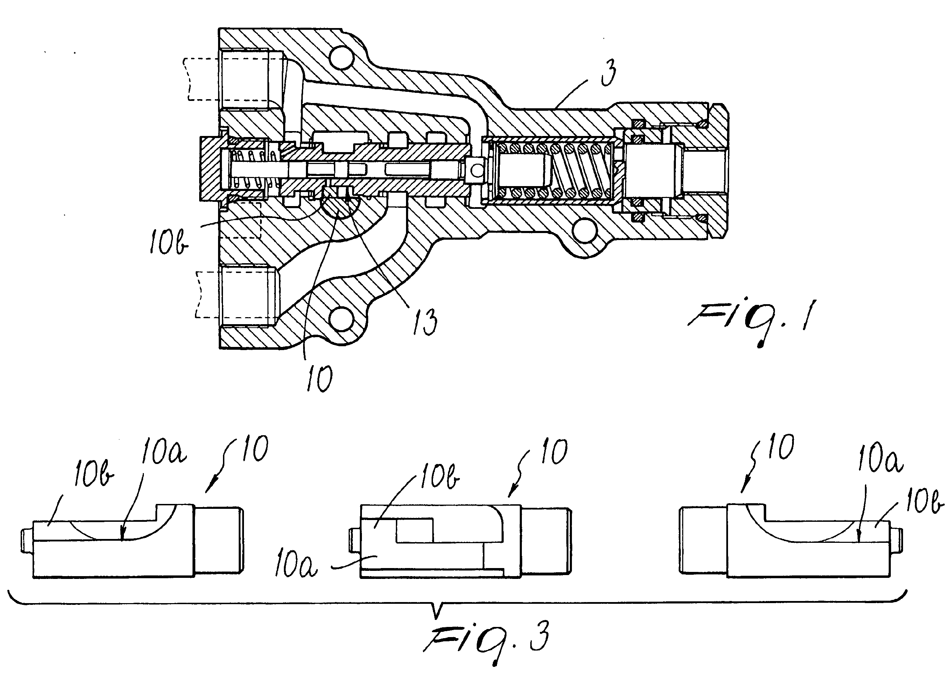

Figure 1 is a longitudinal sectional view of a pressurized fluid distribution unit for supplying a hydraulic braking circuit of a trailer provided with the quick coupling connection system according to the invention;

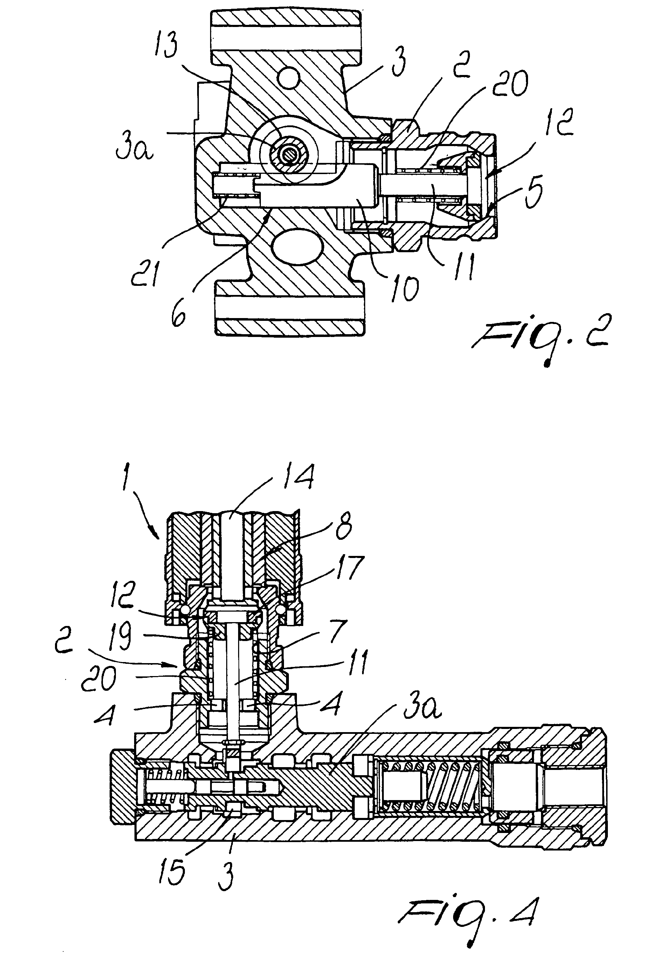

Figure 2 is a corresponding sectional view thereof, taken along a transverse plane;
Figure 3 illustrates three significant views, from the right to the left, from above and from the left to the right, of a retention element in a first embodiment thereof;
Figure 4 is a slightly reduced-scale sectional view, taken along a longitudinal plane, of a pressurized fluid distribution unit provided with the quick coupling connection system according to the invention, in a second embodiment of the retention element and in a configuration for the free sliding of the slider of the distribution unit;
Figure 5 is a corresponding sectional view, taken along the transverse plane of Figure 4;
Figure 6 is a further sectional view, taken along a longitudinal plane, of the distribution unit of Figure 4 in the configuration for locking the movement of its slider;
Figure 7 is a corresponding view, taken along a transverse plane of Figure 6;
Figure 8 is a sectional view, taken along a longitudinal plane, of a connection port which constitutes the quick coupling connection system according to the invention;
Figures 9 and 10 are enlarged-scale detailed views of an element which constitutes the quick coupling connection system in a third embodiment of the retention element;
Figures 11 and 12 are sectional views, taken along a longitudinal plane and along two perpendicular planes, of a fluid distribution unit provided with the quick coupling connection system in an embodiment which bends at right angles.

With reference to the figures, 1 designates a port for connection to the conventional hydraulic circuits of a trailer and 2 designates a valve body which is rigidly mounted on the body of a conventional unit 3 for distributing a pressurized fluid, oil in the specific case, to said braking circuits.

The port 1 and the valve 2 compose the quick coupling connection system according to the invention; the port is mounted on the trailers while the valve is mounted on a tractor.

The valve body 2 is internally provided with ducts 4 for connection to the distribution unit and with a rear opening 5 for the coupling of the port 1.

A retention element 6 move transversely with respect to the slider 3a of the distribution unit 3 said retention element 6 is actuated by way of corresponding means 8 which are rigidly coupled to the port 1 between a position for interfering with said slider 3a and consequently locking its axial sliding and a position in which there is no interference and free sliding can occur.

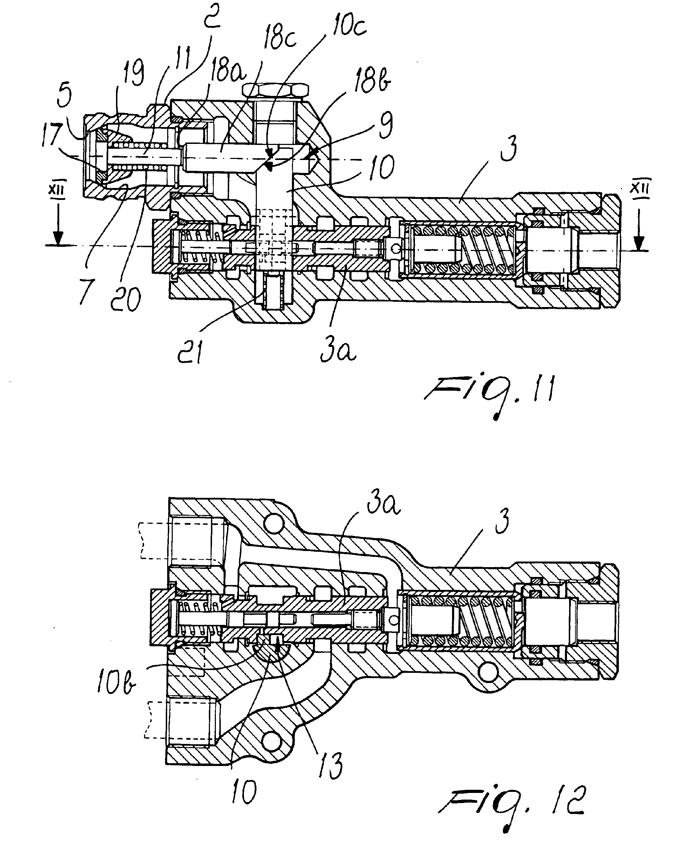

The rear opening 5 can be arranged either in axial alignment with the retention element 6 or at an angle thereto (see Figures 11 and 12), with angular transmission means 9 interposed.

The retention element 6 is constituted, in the preferred embodiment, by a shaped cylinder 10 which is mounted at the end of a stem 11 which is in turn slidingly supported in the valve body 2; the stem 11 supports, at its opposite end, means 12 for closing the rear opening 5.

The shaped cylinder 10 forms, in the region for interference with the slider 3a, a longitudinal recess 10a, from the bottom of which there rises, in an axially offset arrangement, a tooth 10b having a circular profile and in which the concavity is directed outward; said tooth is adapted to enter, in the locking configuration, a suitably provided perimetric groove 13 which is formed in the slider 3a or be extracted from it in the free sliding configuration.

The means 8 for actuating the retention element 6 are constituted by a hollow axial duct 14 through which pressurized fluid passes; said duct 14 is located centrally in the port 1, is rigidly coupled thereto and partly protrudes outwardly into a coupling compartment 1a being formed within the port 1 in the conventional profile which is considered as the front and is adapted to make direct contact with the means 12 for closing the rear opening 5 when the port 1 is in the configuration in which it is mated on the valve body 2.

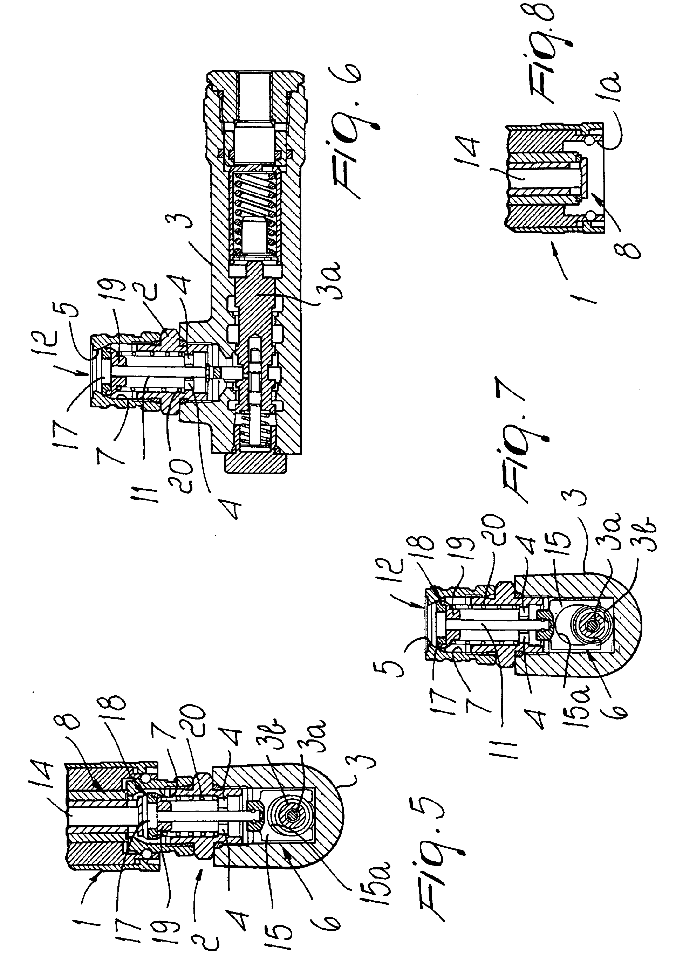

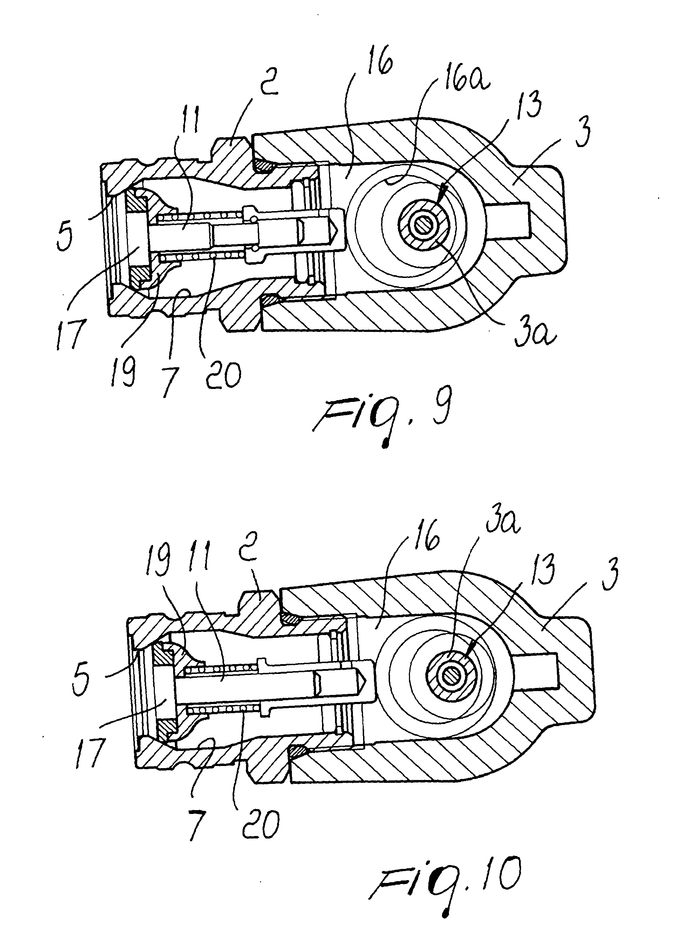

The retention element 6, in a second embodiment (see Figures 4, 5, 6 and 7), can be constituted by a U-shaped member 15 which is fitted at the end of the stem 11 and has centrally an opening 15a having an open circular profile and a diameter which is greater, by a specific extent, than the diameter of the slider 3a, so that in the interference position the opening 15a is located eccentrically to it in order to cause the seating of its inner edge astride a groove 13 formed peripherally therein.

In a third embodiment, the retention element 6 can be constituted by a plate 16 which is mounted vertically at the end of the stem 11; the plate 16 is centrally provided with a circular opening 16a having a closed profile and a diameter which is greater, by a specific extent, than the diameter of the slider 3a; like the above described U-shaped member 15, in the interference position the plate 16, and therefore the opening 16a, are also arranged eccentrically with respect to the slider 3a in order to determine the seating of the inner edge astride the groove 13 formed peripherally therein.

The means 12 for closing the rear opening 5 are constituted, for all the embodiments of the element 6, by a valve of the poppet type, in which the stem coincides with the stem 11 and the enlarged head 17 matches, with a convex profile, the opposite concave profile of the rear opening 5 so as to provide a precision coupling therewith; hermetic sealing means 18 are interposed between the head 17 and the opening 5 and are substantially constituted by gaskets 19 made of elastomeric material which are fitted on the stem 11 and can be arranged in contact with the lower face of the enlarged head 17 and, in the closure configuration, at the inner edge of the rear opening 5.

In the embodiment in which the connection system of the invention is arranged so that its axis is parallel to the axis of the slider 3a, the element 6, in each one of the previously indicated embodiments, is actuated by way of the angular transmission means 9, which are constituted by a pivot 18c being mounted coaxially with respect to the stem 11 and in which one face 18a is kept in contact with the head of said stem and the opposite face 18b is cut obliquely and kept in sliding contact with an opposite oblique face 10c formed at the corresponding end of said shaped cylinder 10.

The oblique faces 10c and 18b are complementary to each other so as to form a right angle arrangement.

A helical spring 20 is fitted on the stem 11 and is adapted to keep the enlarged head 17 pressed against the rear opening 5.

A second helical spring 21 is also provided between the head of the cylinder 10 that is directed towards the inside of the body of the distribution unit 3 and the wall of the seat in which the slider 3a slides; said second spring can be loaded by compression and is adapted to keep said cylinder 10 in the configuration for interfering with the slider 3a when the port 1 is not mated with the valve body 2.

The springs 20 and 21 constitute, as a whole, said elastic return means.

The operation of the connection system according to the invention is described hereinafter with reference to the preferred embodiment of the retention element 6, i.e. the one constituted by the cylinder 10; however, it is similar also in the case of the embodiment with the U-shaped member 15 or with the plate 16.

Operation is as follows: when the port 1 is not inserted in the opening 5 of the valve body 2, the stem 11 and the corresponding enlarged head 17 are kept in the position for closing said opening 5 by the pressure applied by the return spring 20, being fitted on the stem 11 and loadable by compression.

In this position, the cylinder 10 is kept retracted with respect to the slider 3a of the distribution unit 3 and is pushed by the second spring 21 and the tooth 10b interferes with the groove 13 formed perimetrically therein, locking its translational motion within the distribution unit 3.

When an operator engages the port 1 with the valve body 2 by fitting it in the opening 5, the head of the duct 14 makes direct contact with the enlarged head 17, pushing it towards the inside of the seat 7 formed in said valve body 2.

The movement of the head 17, by overcoming the contrast of the spring 20, and therefore the movement of the stem 11, produce the sliding of the cylinder 10 which, by overcoming in turn the contrast of the second spring 21, arranges itself so as to extract the tooth 10b from the groove 13, thus automatically restoring the slidability of the slider 3a of the distribution unit 3, which can thus perform normally its usual function.

The duct 14 is hollow, and through it, while the rear opening 5 is kept pervious, the oil arrives from the distribution unit 3a through the passages 4 and the seat 7 to the braking circuit of the trailer, with a modulated active pressure.

When the trailer is disconnected from the tractor again, and the port 1 is disconnected from the valve body 2, the spring 20 restores the closed configuration of the rear opening 5 by way of the enlarged head 17, which is advantageously provided with hermetic sealing gaskets 19, and also retracts the cylinder 10, which again inserts the tooth 10b in the groove 13 of the slider 3a, automatically locking its stroke again without having to operate other controls.

For the sake of completeness, if it is necessary to arrange the valve body 2 so that the axis of the rear opening is parallel to the axis of the slider 3a, e.g. due to space occupation problems or accessibility problems, the operation of the quick coupling connection system is similar: the only variation is that the movements of the cylinder 10, or in any case of the retention element 6, are actuated by way of the sliding contact between the inclined faces 10c and 18b being formed respectively in the cylinder 10 and in the pivot 18, which physically provide the transmission, in the specific case at right angles.

In practice it has been found that the described invention achieves the intended aim and objects.

The invention thus conceived is susceptible of numerous modifications and variations, all of which are within the scope of the appended claims.

In practice, the materials used, as well as the shapes and the dimensions, may be any according to requirements without thereby abandoning the scope of the protection of the appended claims.

## Claims

1. A connection system for a quick safety coupling for hydraulic braking circuits of trailers, comprising a port (1) for connection to said hydraulic circuits and a valve body (2) being mounted so as to be rigidly coupled to the body of a conventional distribution unit (3) for distributing pressurized fluid to the braking circuit or trailers and having a slider (3a), which distribution unit (3) is mounted on a tractor, whereby the valve body is internally provided with ducts (4) for connection to the distribution unit (3) and with a rear opening (5) for coupling of said port (1), and with a stem (11) which can move in a suitably provided seat formed in said valve body (2), in contrast with elastic return means and which stem (11) is actuated by way of corresponding means (8) which are rigidly coupled to said port (1) between a position for interfering with said slider (3a) and locking its axial sliding and a position in which there is no interference and sliding is freely allowed said stem (11) having, at its opposite end, means (12) for closing said rear opening (5), said elastic return means comprising at least one helical spring (20) which can be loaded by compression and is wound coaxially on said stem (11) which is slidingly supported in said valve body (2), **characterized in that** a retention element (6) which can move transversely to the slider (3a) is mounted at the end of the stem (11) which is slidingly supported in said valve body (2).

2. The quick coupling connection system according to claim 1, **characterized in that** said rear opening (5) is axially aligned with said retention element (6).

3. The quick coupling connection system according to claim 1, **characterized in that** said rear opening (5) is arranged at an angle to said retention element (6) by interposing means (9) for angular transmission of the contact between said means (8) for actuating said retention element (6) and said retention element (6).

4. The quick coupling connection system according to claim 1, **characterized in that** said retention element (6) is constituted by a shaped cylinder (10).

5. The quick coupling connection system according to claims 1 and 4, **characterized in that** said shaped cylinder (10) forms, in the region for interference with said slider (3a), a longitudinal recess (10a) from the bottom of which there rises, in an axially offset arrangement, a tooth (10b) having a circular profile and in which the concavity is directed outward, said tooth (10b) being adapted to enter, in the locking configuration, a suitably provided perimetric groove (13) formed in said slider (3a), or to be extracted therefrom in the configuration for free sliding.

6. The quick coupling connection system according to claims 1, 2, 3 and 4, **characterized in that** said means (8) for actuating said retention element (6) are constituted by a hollow axial duct (14) for the passage of the pressurized fluid, which is centrally accommodated in said port (1), said duct (14) protruding partly outward into a coupling compartment (1a) formed in what is considered the front profile of the port (1) for direct contact with said means (12) for closing the rear opening (5) in the mated configuration of said port (1).

7. The quick coupling connection system according to claim 1, **characterized in that** said retention element (6) is constituted by a U-shaped member (15).

8. The quick coupling connection system according to claim 7, **characterized in that** said U-shaped member (15) is centrally provided with an opening (15a) having an open circular profile and a diameter which is greater, by a specific extent, than the diameter of said slider (3a), said opening (15a) being arranged, in said interference position, eccentrically to said slider (3a) for the insertion of the inner edge astride a groove (13) which is formed peripherally therein, and being arranged, in said free sliding position, coaxially thereto and extracted from said groove (13).

9. The quick coupling connection system according to claim 1, **characterized in that** said retention element (6) is constituted by a plate (16) being fitted vertically at the end of said stem (11).

10. The quick coupling connection system according to claim 9, **characterized in that** said plate (16) is provided centrally with a circular opening (16a) having a closed profile whose diameter is greater, by a specific extent, than the diameter of said slider (3a), said opening (16a) being arranged, in said interference position, eccentrically with respect to said slider (3a) for the insertion of the inner edge astride a groove (13) formed peripherally therein, and being arranged, in said free sliding position, coaxially thereto and extracted from said groove (13).

11. The quick coupling connection system according to the preceding claims, **characterized in that** said means (12) for closing said rear opening are constituted by a valve of the poppet type, in which the stem coincides with said stem (11) for supporting said cylinder (10) or U-shaped member (15) or plate (16), and whose enlarged head (17) matches with a convex profile the opposite concave profile of said rear opening (5) for precision mating therewith, hermetic sealing means (18) being interposed between said head (17) and said opening (5).

12. The quick coupling connection system according to claim 11, **characterized in that** said hermetic sealing means (18) are constituted by gaskets (19) made of elastomeric material which are fitted on said stem (11) and can be arranged in contact with the lower face of said enlarged head (17) in a configuration for closing said rear opening (5).

13. The quick coupling connection system according to claims 3 and 11, **characterized in that** said angular transmission means (9) are constituted by a pivot (18c) which is mounted coaxially and so that one face (18a) is retained in contact with the end of said stem (11) of said poppet valve (12), both being arranged parallel to the sliding axis of said slider (3a) of the fluid distribution unit, the opposite face (18b) being cut obliquely and being kept in sliding contact with a mutually opposite oblique face (10c) formed at the corresponding end of said shaped cylinder (10).

14. The quick coupling connection system according to claim 13, **characterized in that** said oblique faces (10c, 18b) are complementary to each other, so as to form a preset angle arrangement.

15. The quick coupling connection system according to claim 14, **characterized in that** said elastic return means comprise a second helical spring (21) which can be loaded by compression and is interposed between the end of said cylinder (10) that is directed towards said slider (3a) and the mutually opposite wall of the seat for the sliding of said slider (3a)

## Patentansprüche

1. Anschlusssystem für eine Sicherheitsschnellkupplung für hydraulische Bremsanlagen von Anhängern, umfassend einen Anschluss (1) zum Verbinden mit der Hydraulikanlage und einen Ventilkörper (2), der so angebracht ist, dass er starr mit dem Körper einer herkömmlichen Verteilungseinheit (3) zum Verteilen von Druckfluid in die Bremsanlage von Anhängern gekoppelt wird und mit einem Schieber (3a), wobei die Verteilungseinheit (3) auf einer Zugmaschine angebracht ist, wodurch der Ventilkörper innen mit Kanälen (4) zum Verbinden mit der Verteilungseinheit (3) versehen ist und mit einer hinteren Öffnung (5) zum Koppeln des Anschlusses (1) und mit einem Schaft (11), der sich in einem geeignet vorgesehenen Sitz bewegen kann, der im Ventilkörper (2) ausgebildet ist, im Gegenspiel zu elastischen Rückholmitteln und welcher Schaft (11) durch entsprechende Mittel (8) betätigt wird, die starr mit dem Anschluss (1) gekoppelt sind, zwischen einer Position zum Eingriff mit dem Schieber (3a) und Arretieren seiner Axialverschiebung und einer Position, in der kein Eingriff vorliegt und Verschiebung frei möglich ist, welcher Schaft (11) an seinen gegenüberliegenden Enden Mittel (12) zum Schließen der hinteren Öffnung (5) aufweist, wobei die elastischen Rückholmittel mindestens eine Spiralfeder (20) umfassen, die durch Kompression gespannt werden kann und koaxial auf den Schaft (11) gewickelt ist, der verschiebbar im Ventilkörper (2) gelagert ist, **dadurch gekennzeichnet, dass** ein Halteelement (6), das sich quer zum Schieber (3a) bewegen kann, am Ende des Schafts (11) angebracht ist, der im Ventilkörper (2) verschiebbar gelagert ist.

2. Schnellkopplungsanschlusssystem nach Anspruch 1, **dadurch gekennzeichnet, dass** die hintere Öffnung (5) axial mit dem Halteelement (6) fluchtet.

3. Schnellkopplungsanschlusssystem nach Anspruch 1, **dadurch gekennzeichnet, dass** die hintere Öffnung (5) in einem Winkel zum Halteelement (6) angeordnet ist, indem Mittel (9) zur Winkelübertragung des Kontakts zwischen dem Mittel (8) zum Betätigen des Halteelements (6) und dem Halteelement (6) eingesetzt sind.

4. Schnellkopplungsanschlusssystem nach Anspruch 1, **dadurch gekennzeichnet, dass** das Halteelement (6) durch einen geformten Zylinder (10) gebildet ist.

5. Schnellkopplungsanschlusssystem nach Anspruch 1 und 4, **dadurch gekennzeichnet, dass** der geformte Zylinder (10) im Bereich zur Wechselwirkung mit dem Schieber (3a) eine längliche Ausnehmung (10a) bildet, von deren Boden in axial versetzter Anordnung sich ein Zahn (10b) mit einem runden Profil erhebt und in dem die konkave Wölbung nach außen gerichtet ist, wobei der Zahn (10b) geeignet ist, in der Arretierkonfiguration in eine geeignet vorgesehene umlaufende Nut (13) einzutreten, die im Schieber (3a) ausgebildet ist, oder in der Konfiguration für freie Verschiebung daraus entfernt wird.

6. Schnellkopplungsanschlusssystem nach Anspruch 1, 2, 3 und 4, **dadurch gekennzeichnet, dass** die Mittel (8) zum Betätigen des Halteelements (6) durch einen axialen Hohlkanal (14) zum Durchfluss von Druckfluid gebildet sind, der mittig im Anschluss (1) untergebracht ist, wobei der Kanal (14) teilweise nach außen in ein Kopplungsabteil (1 a) vorsteht, das dort ausgebildet ist, wo das Frontprofil des Anschlusses (1) angenommen ist für direkten Kontakt mit dem Mitteln (12) zum Schlie-βen der hinteren Öffnung (5) in der passenden Konfiguration des Anschlusses (1).

7. Schnellkopplungsanschlusssystem nach Anspruch 1, **dadurch gekennzeichnet, dass** das Halteelement (6) durch ein U-förmiges Element (15) gebildet ist.

8. Schnellkopplungsanschlusssystem nach Anspruch 7, **dadurch gekennzeichnet, dass** das U-förmige Element (15) mittig mit einer Öffnung (15a) versehen ist, die ein offenes rundes Profil aufweist und einen Durchmesser, der um ein bestimmtes Maß größer ist als der Durchmesser des Schiebers (3a), wobei die Öffnung (15a) in der Eingriffsposition exzentrisch zum Schieber (3a) zum Einsetzen der Innenkante über eine Nut (13) angeordnet ist, die peripher darin ausgebildet ist, und in der Position der freien Verschiebung koaxial dazu und aus der Nut (13) entfernt angeordnet ist.

9. Schnellkopplungsanschlusssystem nach Anspruch 1, **dadurch gekennzeichnet, dass** das Halteelement (6) durch eine Platte (16) gebildet ist, die vertikal am Ende des Schafts (11) angebracht ist.

10. Schnellkopplungsanschlusssystem nach Anspruch 9, **dadurch gekennzeichnet, dass** die Platte (16) mittig mit einer runden Öffnung (16a) versehen ist, die ein geschlossenes Profil aufweist, dessen Durchmesser um ein bestimmtes Maß größer ist als der Durchmesser des Schiebers (3a), wobei die Öffnung (16a) in der Eingriffsposition exzentrisch zum Schieber (3a) zum Einsetzen der Innenkante über eine Nut (13) angeordnet ist, die peripher darin ausgebildet ist, und in der Position der freien Verschiebung koaxial dazu und aus der Nut (13) entfernt angeordnet ist.

11. Schnellkopplungsanschlusssystem nach einem der vorhergehenden Ansprüche, **dadurch gekennzeichnet, dass** die Mittel (12) zum Schließen der hinteren Öffnung durch ein Ventil vom Typ Tellerventil gebildet sind, in dem der Schaft mit dem Schaft (11) zum Lagern des Zylinders (10) zusammenfällt oder dem U-förmigen Element (15) oder der Platte (16), und dessen vergrößerter Kopf (17) zu einem konvexen Profil des gegenüberliegenden konkaven Profils der hinteren Öffnung (5) zur Präzisionspassung damit passt, wobei hermetische Abdichtmittel (18) zwischen den Kopf (17) und die Öffnung (5) eingesetzt sind.

12. Schnellkopplungsanschlusssystem nach Anspruch 11, **dadurch gekennzeichnet, dass** die hermetischen Abdichtmittel (18) durch Dichtungen (19) aus elastomerem Material gebildet sind, die am Schaft (11) angebracht sind und in Kontakt mit der Unterseite des vergrößerten Kopfes (17) in einer Konfiguration zum Schließen der hinteren Öffnung (5) angeordnet werden können.

13. Schnellkopplungsanschlusssystem nach Anspruch 3 und 11, **dadurch gekennzeichnet, dass** die Mittel (9) zur Winkelübertragung durch ein Gelenk (18c) gebildet sind, das koaxial angebracht ist und so dass eine Seite (18a) in Kontakt mit dem Ende des Schafts (11) des Tellerventils (12) gehalten ist, wobei beide parallel zur Verschiebungsachse des Schiebers (3a) der Fluidverteilungseinheit angeordnet sind, wobei die gegenüberliegende Seite (18b) schräg geschnitten ist und in Gleitkontakt mit einer dazu gegenüberliegenden schrägen Seite (10c) gehalten ist, die am entsprechenden Ende des geformten Zylinders (10) ausgebildet ist.

14. Schnellkopplungsanschlusssystem nach Anspruch 13, **dadurch gekennzeichnet, dass** die schrägen Seiten (10c, 18b) zueinander komplementär sind, so dass sie eine bestimmte Winkelanordnung bilden.

15. Schnellkopplungsanschlusssystem nach Anspruch 14, **dadurch gekennzeichnet, dass** die elastischen Rückholmittel eine zweite Spiralfeder (21) umfassen, die durch Kompression gespannt werden kann und zwischen das Ende des Zylinders (10) eingesetzt ist, das zum Schieber (3a) gerichtet ist und der gegenüberliegenden Wand des Sitzes für die Verschiebung des Schiebers (3a).

## Revendications

1. Système de connexion pour un couplage rapide de sécurité pour des circuits de freinage hydrauliques de remorques, comprenant un orifice (1) pour la connexion auxdits circuits hydrauliques et un corps de soupape (2) qui est monté de façon à être couplé de manière rigide au corps d'une unité de distribution classique (3) pour distribuer du fluide sous pression aux circuits de freinage de remorques et ayant un coulisseau (3a), laquelle unité de distribution (3) est montée sur un tracteur, le corps de soupape comportant, à l'intérieur, des conduits (4) pour une connexion à l'unité de distribution (3), une ouverture arrière (5) pour le couplage dudit orifice (1) et une tige (11) qui peut se déplacer dans un siège prévu de manière appropriée formé dans ledit corps de soupape (2), en opposition avec des moyens de retour élastiques, et ladite tige (11) étant actionnée au moyen de moyens (8) correspondants qui sont couplés de manière rigide audit orifice (1) entre une position permettant d'interférer avec ledit coulisseau (3a) et pour bloquer son coulissement axial, et une position dans laquelle il n'y a pas d'interférence et le coulissement est autorisé librement, ladite tige (11) ayant, au niveau de son extrémité opposée, des moyens (12) pour fermer ladite ouverture arrière (5), lesdits moyens de retour élastiques comprenant au moins un ressort hélicoïdal (20) qui est chargé par compression, et est enroulé de manière coaxiale sur ladite tige (11) qui est supportée de manière coulissante dans ledit corps de soupape (2), **caractérisé en ce qu'**un élément de retenue (6) qui peut se déplacer de manière transversale par rapport au coulisseau (3a), est monté à l'extrémité de la tige (11) qui est supportée de manière coulissante dans ledit corps de soupape (2).

2. Système de connexion à couplage rapide selon la revendication 1, **caractérisé en ce que** ladite ouverture arrière (5) est alignée de manière axiale avec ledit élément de retenue (6).

3. Système de connexion à couplage rapide selon la revendication 1, **caractérisé en ce que** ladite ouverture arrière (5) est agencée selon un axe par rapport audit élément de retenue (6) en interposant des moyens (9) pour la transmission angulaire du contact entre lesdits moyens (8) permettant d'actionner ledit élément de retenue (6) et ledit élément de retenue (6).

4. Système de connexion à couplage rapide selon la revendication 1, **caractérisé en ce que** ledit élément de retenue (6) est constitué par un cylindre profilé (10).

5. Système de connexion à couplage rapide selon les revendications 1 et 4, **caractérisé en ce que** ledit cylindre profilé (10) forme, dans la région pour l'interférence avec ledit coulisseau (3a), un renfoncement longitudinal (10a) à partir du fond duquel remonte, dans un agencement décalé de manière axiale, une dent (10b) ayant un profil circulaire, et dans laquelle la concavité est dirigée vers l'extérieur, ladite dent (10b) étant adaptée pour pénétrer, dans la configuration de blocage, dans une rainure périmétrale (13) prévue de manière appropriée, formée dans ledit coulisseau (3a), ou bien pour être extraite de celle-ci, dans la configuration du coulissement libre.

6. Système de connexion à couplage rapide selon les revendications 1, 2, 3 et 4, **caractérisé en ce que** lesdits moyens (8) pour actionner ledit élément de retenue (6) sont constitués par un conduit axial creux (14) pour le passage du fluide sous pression, qui est logé de manière centrale dans ledit orifice (1), ledit conduit (14) faisant saillie, partiellement vers l'extérieur dans un compartiment de couplage (1a) formé dans ce que l'on considère comme étant le profil avant de l'orifice (1) pour le contact direct avec lesdits moyens (12) pour fermer l'ouverture arrière (5) dans la configuration raccordée dudit orifice (1).

7. Système de connexion à couplage rapide selon la revendication 1, **caractérisé en ce que** ledit élément de retenue (6) est constitué par un élément en forme de U (15).

8. Système de connexion à couplage rapide selon la revendication 7, **caractérisé en ce que** ledit élément en forme de U (15) comporte centralement une ouverture (15a) ayant un profil circulaire ouvert et un diamètre qui est plus grand, sur une étendue spécifique, par rapport au diamètre dudit coulisseau (3a), ladite ouverture (15a) étant agencée, dans ladite position d'interférence, de manière excentrée par rapport audit coulisseau (3a) pour l'insertion du bord interne à cheval sur une rainure (13) qui est formée de manière périphérique à l'intérieur, et étant agencée, dans ladite position de coulissement libre, de manière coaxiale par rapport à celle-ci et extraite de ladite rainure (13).

9. Système de connexion à couplage rapide selon la revendication 1, **caractérisé en ce que** ledit élément de retenue (6) est constitué par une plaque (16) qui est montée verticalement au niveau de l'extrémité de ladite tige (11).

10. Système de connexion à couplage rapide selon la revendication 9, **caractérisé en ce que** ladite plaque (16) comporte centralement une ouverture circulaire (16a) ayant un profil fermé dont le diamètre est plus grand, sur une étendue spécifique, que le diamètre dudit coulisseau (3a), ladite ouverture (16a) étant agencée, dans ladite position d'interférence, de manière excentrée par rapport audit coulisseau (3a) pour l'insertion du bord interne à cheval sur une rainure (13) formée de manière périphérique à l'intérieur de celle-ci, et étant agencée dans ladite position de coulissement libre, de manière coaxiale par rapport à celle-ci et extraite de ladite rainure (13).

11. Système de connexion à couplage rapide selon les revendications précédentes, **caractérisé en ce que** lesdits moyens (12) pour fermer ladite ouverture arrière sont constitués par une soupape de type à tige, dans laquelle la tige coïncide avec ladite tige (11) pour supporter ledit cylindre (10) ou l'élément en forme de U (15) ou la plaque (16), et dont la tête élargie (17) correspond au profil convexe du profil concave opposé de ladite ouverture arrière (5) pour correspondre avec précision avec celle-ci, des moyens d'étanchéité hermétique (18) étant interposés entre ladite tête (17) et ladite ouverture (5).

12. Système de connexion à couplage rapide selon la revendication 11, **caractérisé en ce que** lesdits moyens d'étanchéité hermétique (18) sont constitués par des joints (19) fabriqués avec un matériau élastomère qui sont montés sur ladite tige (11) et qui peuvent être agencés en contact avec la surface inférieure de ladite tête élargie (17) dans une configuration permettant de fermer ladite ouverture arrière (5).

13. Système de connexion à couplage rapide selon les revendications 3 et 11, **caractérisé en ce que** lesdits moyens de transmission angulaire (9) sont constitués par un pivot (18c) qui est monté de manière coaxiale et de sorte qu'une face (18a) est retenue en contact avec l'extrémité de ladite tige (11) de ladite soupape à tige (12), les deux étant agencés parallèlement à l'axe de coulissement dudit coulisseau (3a) de l'unité de distribution de fluide, la face opposée (18b) étant coupée de manière oblique et étant maintenue en contact coulissant avec une face oblique (10c) mutuellement opposée, formée à l'extrémité correspondante dudit cylindre profilé (10).

14. Système de connexion à couplage rapide selon la revendication 13, **caractérisé en ce que** lesdites faces obliques (10c, 18b) sont complémentaires entre elles, afin de former un agencement d'angle prédéterminé.

15. Système de connexion à couplage rapide selon la revendication 14, **caractérisé en ce que** lesdits moyens de retour élastiques comprennent un second ressort hélicoïdal (21) qui peut être chargé par compression et qui est interposé entre l'extrémité dudit cylindre (10) qui est dirigée vers ledit coulisseau (3a) et la paroi mutuellement opposée du siège pour le coulissement dudit coulisseau (3a).
